# EUROPEAN PATENT SPECIFICATION

(11) **EP 1 181 488 B1**
(45) Date of publication and mention of the grant of the patent: **20.10.2004**
(21) Application number: 99933317.2
(22) Date of filing: 28.05.1999
(51) Int. Cl.: F25B 9/00, F25B 11/02

(54) **METHOD AND MEANS FOR CONTROLLING THE GENERATION OF COLD AIR**
VERFAHREN UND VORRICHTUNG ZUM REGELN DER KALTLUFTERZEUGUNG
PROCEDE ET DISPOSITIF PERMETTANT DE REGULER LA PRODUCTION D'AIR FROID

(43) Date of publication of application: 27.02.2002
(73) Proprietor: SVENSKA ROTOR MASKINER AB, S-104 65 Stockholm (SE)
(72) Inventor: ÖHMAN, Henrik, S-183 73 Täby (SE)
(74) Representative: Wiedemann, Bernd
(86) International application number: PCT/SE1999/000912
(87) International publication number: WO 2000/073713

(56) References cited:
- GB-A- 2 273 349
- US-A- 3 221 511
- US-A- 3 878 692
- US-A- 4 771 612
- US-A- 5 600 965

## Description

The present invention relates to a method of controlling a device for generating cold air for cooling objects that need to be cooled, in accordance with the preamble of claims 1-3. The invention also relates to a device whose output cooling power can be regulated to generate cold air in accordance with claims 4-6.

Cooling systems, or refrigerating systems, are based normally on a two-phase cycle in which a primary refrigerant, for instance freon, is caused to alternate between a liquid phase and a gas phase. A system of this nature will generally have a high cooling capacity and will take up large quantities of heat as the primary refrigerant passes from its liquid phase to its gas phase. It is therefore the system that is most used and most preferred in the majority of applications, including air-conditioning. However, the equipment required in such a system is both extensive and expensive.

These known systems require a closed circuit for a typical environmentally hazardous refrigerant, which must be isolated from the surroundings. Actual cooling of the objects is achieved with a secondary medium, for instance air, which is cooled by the primary medium in the closed circuit, through the medium of a heat exchanger.

It has long been known that cooling can also be achieved with a cooling system that operates in accordance with the cold air cycle, designated the open reversed Joule-Brayton cycle. Air (or some other gaseous substance) is the only working medium used in the cooling cycle of this system.

In a cooling system according to the cold air cycle, gas, normally air, is first compressed from ambient pressure, therewith significantly increasing the temperature of the gas. The hot compressed gas is then cooled in a heat exchanger with small pressure losses and thereafter caused to expand to essentially ambient pressure, or preferably a somewhat higher pressure. The heat exchange effected in the heat exchanger is normally with ambient air. This expanded gas is colder than the gas introduced into the compressor and can therefore be used for cooling purposes, for instance air-conditioning, which normally takes place at ambient pressure, in other words at the same pressure as the compressor inlet pressure.

In a system that operates in accordance with the cold air cycle, there is therefore no need to circulate a primary medium that is cyclically condensed and vaporised and from which cold is transferred to a secondary medium, such as air.

The system operating in accordance with the cold air principle has a lower cooling capacity than a conventional cooling system that has a closed circuit which includes a primary refrigerant such a freon. Consequently, the components of a system operating in accordance with the cold air principle will be relatively large and also expensive in relation to cooling capacity.

If a cooling cycle according to the cold air principle is used in a system where the nature of the objects that need to be cooled is such that a relatively large pressure drop will be obtained, the requirements placed on the cooling equipment components will be higher, since the pressure from the cooling equipment must be significantly higher than the ambient pressure. As a result of the requisite overpressure, the temperature at the expander outlet will be higher than if the expander outlet pressure had been closer to the inlet pressure of the cooling equipment. It is necessary to compensate for this temperature difference, by means of correspondingly higher compression in the compressor, so as to obtain a satisfactorily low expander outlet temperature. One situation in which this problem arises is when the cold air is used to cool electronic equipment, for instance electronic equipment in aircraft. Since the air has to pass through a large number of very confined ducts in this latter application, the air that leaves the expander will have a significant overpressure due to the flow resistance in the ducts.

Cooling systems that operate in accordance with the cold air principle for generating cold air for the purpose of cooling objects that need to be cooled, for instance electronic components in aircraft and also aircraft cabins are known to the art. For instance, such a cooling system is described in United States Patent No. 5 732 560. The system described in the United States patent specification includes two parallel compressors having inlet and outlet means, a heat exchanger, an expander having inlet and outlet means, compressor inlet conduits, connecting conduits that ex-tend from the compressors to a common heat exchanger inlet, and a conduit that extends states from the expander outlet means to the object in need of cooling, for instance electronic components.

This described known system is still expensive, because it requires two compressors. The use of two compressors enables the gas supply to the expander to be adjusted, since at least one of the compressors is driven by a separate drive means and since its compressed gas volume can be varied with time. Another described method of adjusting the flow to an object in need of being cooled is to release expanded cold air to the surroundings via a valve in a branch conduit, optionally in heat exchanging contact with the heat exchanger of the system.

Further, GB-A-2 273 349 discloses a method of controlling an arrangement for generating cold air. This arrangement has a compressor wheel driven by an electrical motor for generating a flow of system conditioning air in a closed loop. The loop includes a load heat exchanger, a further compressor wheel, a heat exchanger and a turbine wheel. The other side of the load heat exchanger is connected by a duct for receiving warm air from an enclosure. Conditioned air load is delivered from the load heat exchanger to the enclosure through a second duct. Speed of the motor and hence of the compressor wheel is controlled by an electric control unit to change the pressure drop across the turbine wheel so as to vary the thermal capacity of the system conditioning air loop. The electric control unit receives signals from a temperature sensor in the second duct.

Accordingly, an object of the present invention is to provide a controllable system for generating a cold air flow whose temperature can be regulated in accordance with cooling requirements.

Another object is to provide a controllable system that includes only one compressor and a helical screw expander, and also a method for controlling such a system.

These objects have been achieved in accordance with the invention with a device for generating cold air for cooling objects that require cooling according to any one of the claims 1 to 3.

The method of controlling the inventive arrangements is claimed in claims 4 to 6.

A change in the air flow to the expander will result in a change in the extent to which the pressure is lowered in the expander and therewith also to a change in the temperature of the outgoing air. A reduction in the air flow to the expander inlet will result in a lower expander inlet pressure and therewith in lower pressure reduction during the expansion phase. This lower pressure reduction results in a lower temperature drop, i.e. in a higher temperature of the outgoing air.

One advantage afforded by the present invention is that the system pressure, that is to say the pressure between the compressor outlet means and the inlet means of the helical screw expander, can be reduced when cooling requirements decrease. Because the helical screw expander, can be reduced when cooling requirements decrease. Because the compression in a cold air system requires the highest mechanical effect, less power is required when the system pressure can be reduced.

Preferred embodiments of the present invention will be apparent from the depending Claims.

The invention will now be described in more detail with reference to a detailed description of preferred embodiments and also with reference to the accompanying drawings, in which
Figure 1 is a schematic illustration of a first embodiment of an inventive cold air system;
Figure 2 is a schematic illustration of a second embodiment of an inventive cold air system;
Figure 3 is a schematic illustration of a third embodiment of an inventive cold air system; and
Figure 4 is a schematic illustration of a fourth embodiment of an inventive cold air system.

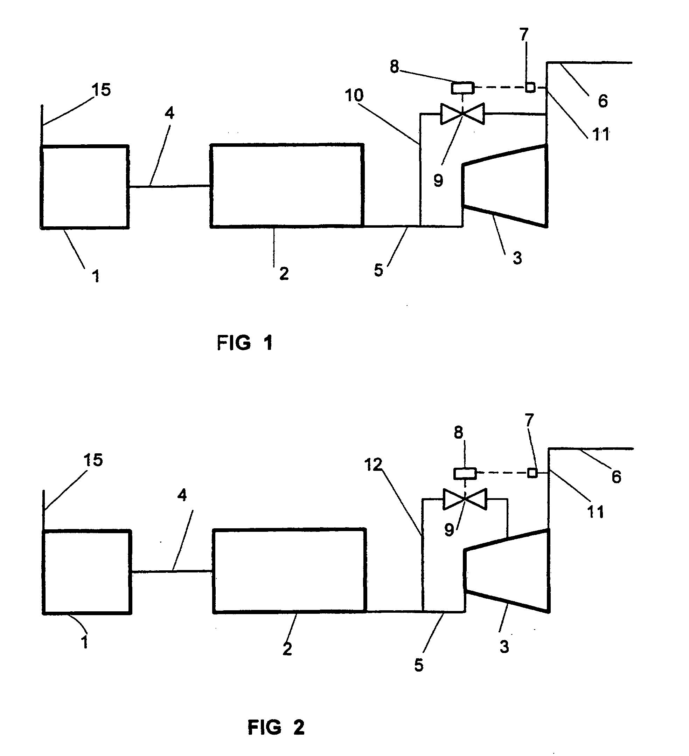

Figure 1 illustrates schematically an embodiment of an inventive arrangement which includes in series a compressor 1 which operates with a substantially constant volume flow, a heat exchanger 2 which is in heat exchange contact with ambient atmosphere, and a helical screw expander 3. The expander 3 also operates with a substantially constant volume flow. A first conduit 4 connects the compressor outlet means with the heat exchanger inlet means, a second conduit 5 is disposed between the heat exchanger outlet means and the inlet means of the helical screw expander 3. A third conduit 6 extends from the expander outlet means to an object or objects (not shown) that needs/need to be cooled, for example electronic components of a stationary aircraft on the hard-standing. The object that needs to be cooled may be included as part of the conduit 6. An inlet conduit 15 may be connected to the inlet means of the compressor 1. The compressor 1 is driven by a drive means, not shown.

A branch conduit 10, which short-circuits the expander inlet and outlet means, is disposed between the second conduit 5 and the third conduit 6. A regulating valve 9 is mounted in the branch line 10. The regulating valve 9 can be adjusted between a closed position and a fully open position.

In the illustrated case, a temperature sensor 11 is placed in the third conduit 6, although it may alternatively be placed in the outlet means of the expander 3. The sensor 11 is connected electrically to a processor 7 which, in turn, is connected to a control device 8. The control device 8 adjusts the throughflow area of the regulating valve 9 in relation to the temperature sensed by the temperature sensor 11.

When starting-up the arrangement, air is delivered to the inlet means of the compressor 1, via the inlet conduit 15. The supply air is compressed in the compressor 1 to a pressure of up to 3 bar, for instance. This compression means that the temperature of the air leaving the compressor outlet means will be much higher than the temperature of the air delivered to the compressor 1. The compressed air is delivered through the conduit 4 to the heat exchanger 2, in which an exchange of heat takes place with the ambient atmosphere with only slight pressure losses, therewith cooling the air. The cooled, compressed air is delivered to the expander 3 through the conduit 5. The valve 9 is closed, so that no air can flow through the branch conduit 10. The pressure of the air is reduced in the helical screw expander 3, wherewith the temperature of the air falls significantly to a temperature that lies beneath the temperature of the compressor inlet air. The air leaving the expander 3 has a higher pressure than the ambient atmosphere, for instance a pressure of 0.11-0.15 MPa.

When the temperature sensed by the temperature sensor 11 is lower than a predetermined lowest temperature, the processor 7 sends a signal to the control device 8 which responds by opening the valve 9. Air can then flow through the branch-conduit 10 to the conduit 6. As air begins to flow through the valve 9, the pressure downstream of the compressor 1 drops. This means that the power required to drive the compressor 1 decreases. The pressure drop across the helical screw expander 3 also decreases, resulting in a lower temperature drop.

The temperature of the air flowing through the branch conduit 10 is higher than the temperature of the air that has expanded in the expander 3. Thus, the temperature of the air in the conduit 6 increases after combining the air flows from the expander 3 and the branch conduit 10. This temperature change in the conduit 6 results in a reduction in the throughflow area of the valve 9.

Figure 2 is a schematic illustration of an embodiment of the arrangement illustrated in Figure 1. Similar to the Figure 1 arrangement, the Figure 2 arrangement includes a compressor 1, a heat exchanger 2 which is in heat exchange contact with ambient atmosphere, and a helical screw expander 3, these components being connected in series. The branch conduit 10 of the Figure 1 embodiment is replaced with a branch conduit 12. The branch conduit 12 is also provided with a regulating valve 9 which is actuated by the control device 8. The branch conduit 12 extends from the conduit 5 and opens into a closed working chamber of the helical screw expander 3. In a helical screw expander, a working chamber has its smallest volume when closing against the expander inlet. During continued rotation of the expander, the volume of the closed working chamber will increase until the chamber comes into contact with the outlet of said expander 3. The branch conduit 12 opens into a working chamber when its volume is greater than the smallest volume at the moment of closure.

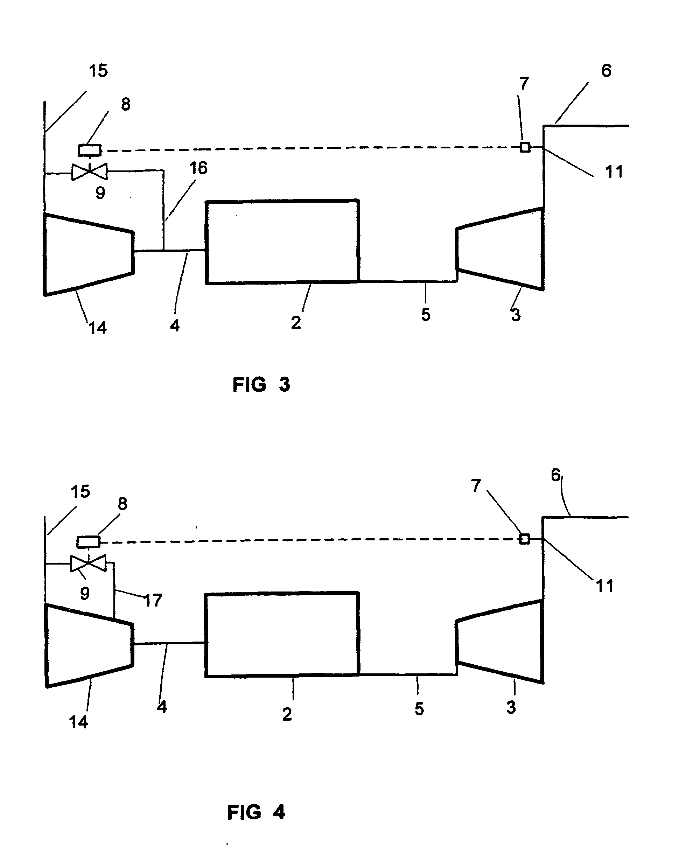

Figure 3 illustrates schematically an arrangement which differs from the aforedescribed arrangements by virtue of the fact that the compressor is a helical screw compressor 14 and that the branch conduit 10 of Figure 1 has been replaced with a branch conduit 16. Other components are identical to those of the Figure 1 embodiment. The branch conduit 16 of the Figure 3 embodiment also includes a regulating valve 9 which is actuated by the control device 8. The branch conduit 16 connects the supply conduit 15 to the outlet means of the compressor 14 or to the first conduit 4.

When starting-up the arrangement shown in Figure 3, air is delivered to the inlet means of the compressor 14 via the inlet conduit 15. The supply air is compressed in the compressor 1 to a pressure of, e.g., 3 bar. As a result of this compression, the temperature of the air leaving the outlet means of the compressor 14 will be much higher than the temperature of the air supplied to said compressor. The valve 9 is closed, so that no air is able to flow through the branch conduit 16. The compressed air is delivered to the heat exchanger 2 through the conduit 4 and a heat exchange takes place in the heat exchanger with the ambient atmosphere with only small pressure losses, therewith cooling the air. The cooled compressed air is delivered to the expander 3 through the conduit 5. The pressure of the air is reduced in the expander 3, wherewith the temperature falls drastically to a temperature which lies beneath the temperature of the compressor supply air. The pressure of the air leaving the expander 3 is higher than the pressure of the ambient atmosphere, e.g. a pressure of 0.11-0.15 MPa.

When the temperature sensed by the temperature sensor 11 is lower than a predetermined lowest temperature, the processor 7 sends a signal to the control device 8 which responds by opening the valve 9. Air is then able to flow back to the inlet conduit 15, through the branch conduit 16. The pressure downstream of the compressor 14 falls as air begins to flow through the valve 9. This means that less power is required to drive the compressor 14.

The temperature of the air flowing through the branch conduit 16 is much higher than the temperature of the ambient air supplied to the compressor 14. Consequently, the air entering the compressor 14 will have a higher temperature than the ambient atmosphere and that the output temperature will also be higher. At the same time, the volume of air delivered to the heat exchanger and the helical screw expander 3 decreases, as does also the pressure upstream of the expander 3. The net result is that the air from the expander 3 obtains a higher temperature, which results in adjustment to the throughflow area of the regulating valve.

The embodiment illustrated in Figure 4 is similar to the Figure 3 embodiment, but differs therefrom by virtue of the branch conduit 16 in Figure 3 having been replaced with a branch conduit 17. Instead of connecting the first conduit 4 with the inlet conduit 15, the branch conduit 17 in Figure 4 connects a closed working chamber in the compressor 14 with said inlet conduit 15.

In a helical screw compressor, a working chamber has its greatest volume when closing against the inlet means. As rotation continues, the volume of the closed working chamber decreases until the other end of said working chamber establishes fluid communication with the compressor outlet means. The branch conduit 17 is arranged in the compressor 14 so that a working chamber will come into contact with the orifice of the branch conduit prior to fluid connection with the outlet means being established and subsequent to establishing fluid connection with the inlet means.

The arrangement according to Figure 4 operates in a manner corresponding to the arrangement according to the Figure 3 embodiment.

## Claims

1. A method of controlling an arrangement for generating cold air for cooling objects that need to be cooled, said arrangement including in series a compressor (14) having inlet and outlet means and functioning to compress air at ambient pressure, a heat exchanger (2) having air inlet and outlet means, a helical screw expander (3) having inlet and outlet means, and in which arrangement a first conduit (4) connects the compressor (14) outlet means with the heat exchanger (2) inlet means, a second conduit (5) connects the heat exchanger (2) outlet means with the inlet means of the helical screw expander (3), and which includes a third conduit (6) that connects the outlet means of said helical screw expander (3) with the object that needs to be cooled, said method is **characterised by** sensing the temperature of the air exiting from the helical screw expander (3) at a position in or downstream of the expander (3) outlet means and adjusting the flow of air to the expander (3) inlet means in accordance with the sensed temperature, whereby the air flow to the expander inlet means is adjusted by decreasing the flow delivered from the compressor (1; 14) to the heat exchanger (2).

2. A method of controlling an arrangement for generating cold air for cooling objects that need to be cooled, said arrangement including in series a compressor (1) having inlet and outlet means and functioning to compress air at ambient pressure, a heat exchanger (2) having air inlet and outlet means, a helical screw expander (3) having inlet and outlet means, and in which arrangement a first conduit (4) connects the compressor (1) outlet means with the heat exchanger (2) inlet means, a second conduit (5) connects the heat exchanger (2) outlet means with the inlet means of the helical screw expander (3), and which includes a third conduit (6) that connects the outlet means of said helical screw expander (3) with the object that needs to be cooled, said method **characterised by** sensing the temperature of the air exiting from the helical screw expander (3) at a position in or downstream of the expander (3) outlet means and adjusting the flow of air to the expander (3) inlet means in accordance with the sensed temperature, whereby the air flow to the expander (3) inlet means is adjusted by taking out a part-flow at a point between the heat exchanger (2) and the expander inlet means and causing said part-flow to by-pass the expander (3).

3. A method of controlling an arrangement for generating cold air for cooling objects that need to be cooled, said arrangement including in series a compressor (1) having inlet and outlet means and functioning to compress air at ambient pressure, a heat exchanger (2) having air inlet and outlet means, a helical screw expander (3) having inlet and outlet means, and in which arrangement a first conduit (4) connects the compressor (1) outlet means with the heat exchanger (2) inlet means, a second conduit (5) connects the heat exchanger (2) outlet means with the inlet means of the helical screw ex-5 pander (3), and which includes a third conduit (6) that connects the outlet means of said helical screw expander (3) with the object that needs to be cooled, said method **characterised by** sensing the temperature of the air exiting from the helical screw expander (3) at a position in or downstream of the expander (3) outlet means; and adjusting the flow of air to the expander (3) inlet means in accordance with the sensed temperature, whereby the air flow to the expander inlet means is adjusted by taking out a part-flow at a point between the heat exchanger and the expander inlet means and passing said part-flow to a closed working chamber in the expander.

4. An arrangement for generating cold air for cooling objects that are in need of being cooled, said arrangement comprising in series a compressor (1) having inlet and outlet means, a heat exchanger (2) having inlet and outlet means, a helical screw expander (3) having inlet and outlet means, a first conduit (4) which connects the compressor outlet means to the heat exchanger inlet means, a second conduit (5) which connects the heat exchanger outlet means with the expander inlet means, a third conduit (6) which extends from the expander outlet means to the object that is in need of being cooled, a temperature sensor (11) located in the expander outlet means or in the third conduit (6), and means (7, 8, 9; 10) which are actuated by the temperature sensor (11) **characterised in that** said means (7, 8, 9, 10) adjust the flow of air to the expander inlet means in accordance with the sensed temperature, and said means (7, 8, 9 10) actuated by said temperature sensor (11) include a control valve (9) mounted in a conduit (10) that connects the second conduit (5) to the expander outlet means or to the third conduit (6).

5. An arrangement for generating cold air for cooling objects that are in need of being cooled, said arrangement comprising in series a compressor (1) having inlet and outlet means, a heat exchanger (2) having inlet and outlet means, a helical screw expander (3) having inlet and outlet means, a first conduit (4) which connects the compressor outlet means to the heat exchanger inlet means, a second conduit (5) which connects the heat exchanger outlet means with the expander inlet means, a third conduit (6) which extends from the expander outlet means to the object that is in need of being cooled, a temperature sensor (11) located in the expander outlet means or in the third conduit (6), and means (7, 8, 9; 12) which is actuated by the temperature sensor (11) **characterised in that** said means (7, 8, 9, 12) adjusts the flow of air to the expander inlet means in accordance with the sensed temperature, and **in that** said means (7, 8, 9, 12) which are actuated by the temperature sensor (11) include a control valve (9) mounted in a conduit (12) that connects the second conduit (5) with a closed working chamber in the helical screw expander (3).

6. An arrangement for generating cold air for cooling objects that are in need of being cooled, said arrangement comprising in series a compressor (14) having inlet and outlet means, a heat exchanger (2) having inlet and outlet means, a helical screw expander (3) having inlet and outlet means, a first conduit (4) which connects the compressor outlet means to the heat exchanger inlet means, a second conduit (5) which connects the heat exchanger outlet means with the expander inlet means, a third conduit (6) which extends from the expander outlet means to the object that is in need of being cooled, a temperature sensor (11) located in the expander outlet means or in the third conduit (6), and means (7, 8, 9, 17) which is actuated by the temperature sensor (11), **characterised in that** said means (7, 8, 9, 17) adjust the flow of air to the expander inlet means in accordance with the sensed temperature, and **in that** said means (7, 8, 9, 17) which are actuated by the temperature sensor (11) include a control valve (9) mounted in a conduit (17) that connects a closed working chamber in the compressor (14) with the compressor inlet means or with the inlet conduit (15).

## Patentansprüche

1. Verfahren zum Steuern einer Vorrichtung zum Erzeugen von Kaltluft zum Kühlen von Gegenständen, die gekühlt werden müssen, wobei die Vorrichtung in Reihe einen Verdichter (14) mit Einlaß- und Auslaßmitteln, der zum Verdichten von Luft mit Umgebungsdruck dient, einen Wärmetauscher (2) mit Lufteinlaß- und Luftauslaßmitteln und einen Schraubenentspanner mit Einlaß- und Auslaßmitteln umfaßt und in der Vorrichtung eine erste Leitung (4) die Auslaßmittel des Verdichters (14) mit den Einlaßmitteln des Wärmetauschers (2) verbindet, eine zweite Leitung (5) die Auslaßmittel des Wärmetauschers (2) mit den Einlaßmitteln des Schraubenentspanners (3) verbindet und eine dritte Leitung (6) die Auslaßmittel des Schraubenentspanners (3) mit dem Gegenstand, der gekühlt werden muß, verbindet, **dadurch gekennzeichnet, daß** die Temperatur der aus dem Schraubenentspanner (3) austretenden Luft an einer Stelle innerhalb oder stromabwärts der Auslaßmittel des Entspanners (3) erfaßt und der Luftstrom zu den Einlaßmitteln des Entspanners (3) im Einklang mit der erfaßten Temperatur eingestellt wird, wobei der Luftstrom zu den Einlaßmitteln des Entspanners durch Verringern des von dem Verdichter (14) zu dem Wärmetauscher (2) geleiteten Stroms eingestellt wird.

2. Verfahren zum Steuern einer Vorrichtung zum Erzeugen von Kaltluft zum Kühlen von Gegenständen, die gekühlt werden müssen, wobei die Vorrichtung in Reihe einen Verdichter (1) mit Einlaß- und Auslaßmitteln, der zum Verdichten von Luft mit Umgebungsdruck dient, einen Wärmetauscher (2) mit Lufteinlaß- und Luftauslaßmitteln und einen Schraubenentspanner mit Einlaß- und Auslaßmitteln umfaßt und in der Vorrichtung eine erste Leitung (4) die Auslaßmittel des Verdichters (1) mit den Einlaßmitteln des Wärmetauschers (2) verbindet, eine zweite Leitung (5) die Auslaßmittel des Wärmetauschers (2) mit den Einlaßmitteln des Schraubenentspanners (3) verbindet und eine dritte Leitung (6) die Auslaßmittel des Schraubenentspanners (3) mit dem Gegenstand, der gekühlt werden muß, verbindet, **dadurch gekennzeichnet, daß** die Temperatur der aus dem Schraubenentspanner (3) austretenden Luft an einer Stelle innerhalb oder stromabwärts der Auslaßmittel des Entspanners (3) erfaßt und der Luftstrom zu den Einlaßmitteln des Entspanners (3) im Einklang mit der erfaßten Temperatur eingestellt wird, wobei der Luftstrom zu den Einlaßmitteln des Entspanners (3) durch Wegnahme eines Teilstromes an einer Stelle zwischen dem Wärmetauscher (2) und den Einlaßmitteln des Entspanners eingestellt wird und dieser Teilstrom veranlaßt wird, an dem Entspanner (3) vorbei zu strömen.

3. Verfahren zum Steuern einer Vorrichtung zum Erzeugen von Kaltluft zum Kühlen von Gegenständen, die gekühlt werden müssen, wobei die Vorrichtung in Reihe einen Verdichter (1) mit Einlaß- und Auslaßmitteln, der zum Verdichten von Luft mit Umgebungsdruck dient, einen Wärmetauscher (2) mit Lufteinlaß- und Luftauslaßmitteln und einen Schraubenentspanner mit Einlaß- und Auslaßmitteln umfaßt und in der Vorrichtung eine erste Leitung (4) die Auslaßmittel des Verdichters (1) mit den Einlaßmitteln des Wärmetauschers (2) verbindet, eine zweite Leitung (5) die Auslaßmittel des Wärmetauschers (2) mit den Einlaßmitteln des Schraubenentspanners (3) verbindet und eine dritte Leitung (6) die Auslaßmittel des Schraubenentspanners (3) mit dem Gegenstand, der gekühlt werden muß, verbindet, **dadurch gekennzeichnet, daß** die Temperatur der aus dem Schraubenentspanner (3) austretenden Luft an einer Stelle innerhalb oder stromabwärts der Auslaßmittel des Entspanners (3) erfaßt und der Luftstrom zu den Einlaßmitteln des Entspanners durch Wegnahme eines Teilstromes an einer Stelle zwischen dem Wärmetauscher und den Einlaßmitteln des Entspanners eingestellt wird und dieser Teilstrom einer geschlossenen Arbeitskammer in dem Entspanner zugeleitet wird.

4. Vorrichtung zum Erzeugen von Kaltluft zum Kühlen von Gegenständen, die gekühlt werden müssen, wobei die Vorrichtung in Reihe einen Verdichter (1) mit Einlaß- und Auslaßmitteln, einen Wärmetauscher (2) mit Einlaß- und Auslaßmitteln, einen Schraubenentspanner (3) mit Einlaß- und Auslaßmitteln, eine erste Leitung (4), die die Auslaßmittel des Verdichters mit den Einlaßmitteln des Wärmetauschers verbindet, eine zweite Leitung (5), die die Auslaßmittel des Wärmetauschers mit den Einlaßmitteln des Entspanners verbindet, eine dritte Leitung (6), die sich von den Auslaßmitteln des Entspanners zu dem Gegenstand, der gekühlt werden muß, erstreckt, einen Temperatursensor (11), der in den Auslaßmitteln des Entspanners oder in der dritten Leitung (6) angeordnet ist, und Mittel (7, 8, 9; 10) aufweist, die durch den Temperatursensor (11) betätigt werden, **dadurch gekennzeichnet, daß** die Mittel (7, 8, 9, 10) den Luftstrom zu den Einlaßmitteln des Entspanners im Einklang mit der erfaßten Temperatur einstellen und die durch den Temperatursensor (11) betätigten Mittel ein Steuerventil (9) umfassen, das in einer Leitung (10) angeordnet ist, die die zweite Leitung (5) mit den Auslaßmitteln des Entspanners oder der dritten Leitung (6) verbindet.

5. Vorrichtung zum Erzeugen von Kaltluft zum Kühlen von Gegenständen, die gekühlt werden müssen, wobei die Vorrichtung in Reihe einen Verdichter (1) mit Einlaß- und Auslaßmitteln, einen Wärmetauscher (2) mit Einlaß- und Auslaßmitteln, einen Schraubenentspanner (3) mit Einlaß- und Auslaßmitteln, eine erste Leitung (4), die die Auslaßmittel des Verdichters mit den Einlaßmitteln des Wärmetauschers verbindet, eine zweite Leitung (5), die die Auslaßmittel des Wärmetauschers mit den Einlaßmitteln des Entspanners verbindet, eine dritte Leitung (6), die sich von den Auslaßmitteln des Entspanners zu dem Gegenstand, der gekühlt werden muß, erstreckt, einen Temperatursensor (11), der in den Auslaßmitteln des Entspanners oder in der dritten Leitung (6) angeordnet ist, und Mittel (7, 8, 9; 12) aufweist, die durch den Temperatursensor (11) betätigt werden, **dadurch gekennzeichnet, daß** die Mittel (7, 8, 9, 12) den Luftstrom zu den Einlaßmitteln des Entspanners im Einklang mit der erfaßten Temperatur einstellen und daß diese Mittel (7, 8, 9, 12), die durch den Temperatursensor (11) betätigt werden, ein Steuerventil (9) umfassen, das in einer Leitung (12) montiert ist, die die zweite Leitung (5) mit einer geschlossenen Arbeitskammer in dem Schraubenentspanner (3) verbindet.

6. Vorrichtung zum Erzeugen von Kaltluft zum Kühlen von Gegenständen, die gekühlt werden müssen, wobei die Vorrichtung in Reihe einen Verdichter (14) mit Einlaß- und Auslaßmitteln, einen Wärmetauscher (2) mit Einlaß- und Auslaßmitteln, einen Schraubenentspanner (3) mit Einlaß- und Auslaßmitteln, eine erste Leitung (4), die die Auslaßmittel des Verdichters mit den Einlaßmitteln des Wärmetauschers verbindet, eine zweite Leitung (5), die die Auslaßmittel des Wärmetauschers mit den Einlaßmitteln des Entspanners verbindet, eine dritte Leitung (6), die sich von den Auslaßmitteln des Entspanners zu dem Gegenstand, der gekühlt werden muß, erstreckt, einen Temperatursensor (11), der in den Auslaßmitteln des Entspanners oder in der dritten Leitung (6) angeordnet ist, und Mittel (7, 8, 9; 17) aufweist, die durch den Temperatursensor (11) betätigt werden, **dadurch gekennzeichnet, daß** die Mittel (7, 8, 9, 17) den Luftstrom zu den Einlaßmitteln des Entspanners im Einklang mit der erfaßten Temperatur einstellen und daß die Mittel (7, 8, 9, 17), die durch den Temperatursensor (11) betätigt werden, ein Steuerventil (9) umfassen, das in einer Leitung (17) montiert ist, die eine geschlossene Arbeitskammer in dem Verdichter (14) mit den Einlaßmitteln des Verdichters oder mit der Einlaßleitung (15) verbindet.

## Revendications

1. Procédé de régulation d'un agencement de production d'air froid permettant de refroidir des objets qui ont besoin d'être refroidis, ledit agencement comprenant un compresseur en série (14) ayant des moyens d'entrée et de sortie et fonctionnant de manière à comprimer l'air à une pression ambiante, un échangeur de chaleur (2) ayant des moyens d'entrée et de sortie d'air, un mandrin expansible à vis sans fin (3) ayant des moyens d'entrée et de sortie, et agencement dans lequel un premier conduit (4) raccorde les moyens de sortie du compresseur (14) avec les moyens d'entrée de l'échangeur de chaleur (2), un deuxième conduit (5) raccorde les moyens de sortie de l'échangeur de chaleur (2) avec les moyens d'entrée du mandrin expansible à vis sans fin (3), et qui comprend un troisième conduit (6) qui raccorde les moyens de sortie dudit mandrin expansible à vis sans fin (3) avec l'objet qui a besoin d'être refroidi, ledit procédé étant **caractérisé par** la détection de la température de l'air sortant du mandrin expansible à vis sans fin (3) au niveau d'une position dans ou en aval des moyens de sortie du mandrin expansible (3) et par la régulation du flux d'air vers les moyens d'entrée du mandrin expansible (3) conformément à la température détectée, moyennant quoi, le flux d'air vers les moyens d'entrée du mandrin expansible (3) est régulé par la diminution du flux fourni par le compresseur (1, 14) à l'échangeur de chaleur (2).

2. Procédé de régulation d'un agencement permettant de générer de l'air froid afin de refroidir des objets qui ont besoin d'être refroidis, ledit agencement comprenant un compresseur en série (1) ayant des moyens d'entrée et de sortie et fonctionnant de manière à comprimer l'air à une pression ambiante, un échangeur de chaleur (2) ayant des moyens d'entrée et de sortie d'air, un mandrin expansible à vis sans fin (3) ayant des moyens d'entrée et de sortie, et agencement dans lequel un premier conduit (4) raccorde les moyens de sortie du compresseur (1) avec les moyens d'entrée de l'échangeur de chaleur (2), un deuxième conduit (5) raccorde les moyens de sortie de l'échangeur de chaleur (2) avec les moyens d'entrée du mandrin expansible à vis sans fin (3), et qui comprend un troisième conduit (6) qui raccorde les moyens de sortie dudit mandrin expansible à vis sans fin (3) avec l'objet qui a besoin d'être refroidi, ledit procédé étant **caractérisé par** la détection de la température de l'air sortant du mandrin expansible à vis sans fin (3) au niveau d'une position dans ou en aval des moyens de sortie du mandrin expansible (3) et par la régulation du flux d'air vers les moyens d'entrée du mandrin expansible (3) conformément à la température détectée, moyennant quoi le flux d'air vers les moyens d'entrée du mandrin expansible (3) est régulé par le retrait d'un flux partiel au niveau d'un point entre l'échangeur de chaleur (2)et les moyens d'entrée du mandrin expansible, ce qui oblige ledit flux partiel à contourner le mandrin expansible (3).

3. Procédé de régulation d'un agencement de production d'air froid permettant de refroidir des objets qui ont besoin d'être refroidis, ledit agencement comprenant un compresseur en série (1) ayant des moyens d'entrée et de sortie et fonctionnant de manière à comprimer l'air à une pression ambiante, un échangeur de chaleur (2) ayant des moyens d'entrée et de sortie d'air, un mandrin expansible à vis sans fin (3) ayant des moyens d'entrée et de sortie, et agencement dans lequel un premier conduit (4) raccorde les moyens de sortie du compresseur (1) avec les moyens d'entrée de l'échangeur de chaleur (2), un deuxième conduit (5) raccorde les moyens de sortie de l'échangeur de chaleur (2) avec les moyens d'entrée du mandrin expansible à vis sans fin (3), et qui comprend un troisième conduit (6) qui raccorde les moyens de sortie dudit mandrin expansible à vis sans fin (3) avec l'objet qui a besoin d'être refroidi, ledit procédé étant **caractérisé par** la détection de la température de l'air sortant du mandrin expansible à vis sans fin (3) au niveau d'une position dans ou en aval des moyens de sortie du mandrin expansible (3) ; et par la régulation du flux d'air vers les moyens d'entrée du mandrin expansible (3) conformément à la température détectée, moyennant quoi le flux d'air vers les moyens d'entrée du mandrin expansible (3) est régulé par le retrait d'un flux partiel au niveau d'un point situé entre l'échangeur de chaleur et les moyens d'entrée du mandrin expansible et par le passage dudit flux partiel vers une chambre de travail fermée dans le mandrin expansible.

4. Agencement de production d'air froid permettant de refroidir des objets qui ont besoin d'être refroidis, ledit agencement comprenant un compresseur en série (1) ayant des moyens d'entrée et de sortie, un échangeur de chaleur (2) ayant des moyens d'entrée et de sortie d'air, un mandrin expansible à vis sans fin (3) ayant des moyens d'entrée et de sortie, un premier conduit (4) qui raccorde les moyens de sortie du compresseur avec les moyens d'entrée de l'échangeur de chaleur, un deuxième conduit (5) qui raccorde les moyens de sortie de l'échangeur de chaleur avec les moyens d'entrée du mandrin expansible, un troisième conduit (6) qui s'étend depuis les moyens de sortie du mandrin expansible jusqu'à l'objet qui a besoin d'être refroidi, un détecteur de température (11) situé dans les moyens de sortie du mandrin expansible ou dans le troisième conduit (6), et des moyens (7, 8, 9, 10) qui sont actionnés par le détecteur de température (11), **caractérisé en ce que** lesdits moyens (7, 8, 9, 10) régulent le flux d'air vers les moyens d'entrée du mandrin expansible conformément à la température détectée et **en ce que** lesdits moyens (7, 8, 9, 10) actionnés par le détecteur de température (11) incluent une soupape de contrôle (9) montée dans un conduit (10) qui raccorde le deuxième conduit (5) aux moyens de sortie du mandrin expansible ou au troisième conduit (6).

5. Agencement de production d'air froid permettant de refroidir des objets qui ont besoin d'être refroidis, ledit agencement comprenant un compresseur en série (1) ayant des moyens d'entrée et de sortie, un échangeur de chaleur (2) ayant des moyens d'entrée et de sortie, un mandrin expansible à vis sans fin (3) ayant des moyens d'entrée et de sortie, un premier conduit (4) qui raccorde les moyens de sortie du compresseur aux moyens d'entrée de l'échangeur de chaleur, un deuxième conduit (5) qui raccorde les moyens de sortie de l'échangeur de chaleur aux moyens d'entrée du mandrin expansible, un troisième conduit (6) qui s'étend depuis les moyens de sortie du mandrin expansible jusqu'à l'objet qui a besoin d'être refroidi, un détecteur de température (11) situé dans les moyens de sortie du mandrin expansible ou dans le troisième conduit (6) et des moyens (7, 8, 9) qui sont actionnés par le détecteur de température (11), **caractérisé en ce que** lesdits moyens (7, 8, 9, 12) régulent le flux d'air jusqu'aux moyens d'entrée du mandrin expansible conformément à la température détectée, et **en ce que** lesdits moyens (7, 8, 9, 12), qui sont actionnés par le détecteur de température (11) comprennent une soupape de contrôle (9) montée dans un conduit (12) qui raccorde le deuxième conduit (5) avec une chambre de travail fermée dans le mandrin expansible à vis sans fin (3).

6. Agencement de production d'air froid permettant de refroidir des objets qui ont besoin d'être refroidis, ledit agencement comprenant un compresseur en série (14) ayant des moyens d'entrée et de sortie, un échangeur de chaleur (2) ayant des moyens d'entrée et de sortie, un mandrin expansible à vis sans fin (3) ayant des moyens d'entrée et de sortie, un premier conduit (4) qui raccorde les moyens de sortie du compresseur aux moyens d'entrée de l'échangeur de chaleur, un deuxième conduit (5) qui raccorde les moyens de sortie de l'échangeur de chaleur avec les moyens d'entrée du mandrin expansible, un troisième conduit (6) qui s'étend depuis les moyens de sortie du mandrin expansible jusqu'à l'objet qui a besoin d'être refroidi, un détecteur de température (11) situé dans les moyens de sortie du mandrin expansible ou dans le troisième conduit (6), et des moyens (7, 8, 9, 17) qui sont actionnés par le détecteur de température (11), **caractérisé en ce que** lesdits moyens (7, 8, 9, 17) régulent le flux d'air vers les moyens d'entrée du mandrin expansible conformément à la température détectée, et **en ce que** lesdits moyens (7, 8, 9, 17), qui sont actionnés par ledit détecteur de température (11), comprennent une soupape de contrôle (9) montée dans un conduit (17) qui raccorde une chambre de travail fermée dans le compresseur (14) avec les moyens d'entrée du compresseur ou avec le conduit d'entrée (15).
